# EUROPÄISCHE PATENTSCHRIFT

(11) **EP 2 847 242 B1**
(45) Veröffentlichungstag und Bekanntmachung des Hinweises auf die Patenterteilung: **10.07.2019**
(21) Anmeldenummer: 13721934.1
(22) Anmeldetag: 29.04.2013
(51) Int. Cl.: C08C 19/25, C08F 36/04, C08C 19/44, B60C 1/00, C08F 236/10

(54) **ALLYLAMINHALTIGE,CARBINOLTERMINIERTE POLYMERE**
CARBINOL-TERMINATED POLYMERS CONTAINING ALLYLAMINE
POLYMÈRE CARBINOLTERMINÉ CONTENANT DES ALLYLAMINES

(30) Priorität: 09.05.2012 EP 12167357
(43) Veröffentlichungstag der Anmeldung: 18.03.2015
(73) Patentinhaber: ARLANXEO Deutschland GmbH, 41540 Dormagen (DE)
(72) Erfinder: STEINHAUSER, Norbert, 41539 Dormagen (DE); ALBINO, Fernanda, 50672 Köln (DE); GROSS, Thomas, 42489 Wülfrath (DE)
(86) Internationale Anmeldenummer: PCT/EP2013/058870
(87) Internationale Veröffentlichungsnummer: WO 2013/167410

(56) Entgegenhaltungen:
- WO-A1-2010/043664
- WO-A1-2011/079922
- US-A- 5 290 901
- US-A1- 2008 255 317

## Beschreibung

Die Erfindung betrifft Dienpolymere mit Funktionalisierungen an den Polymerkettenanfängen und an den Polymerkettenenden, deren Herstellung und Verwendung.

Bei Reifenlaufflächen werden als wichtige Eigenschaften eine gute Haftung auf trockener und nasser Oberfläche sowie ein hoher Abriebwiderstand angestrebt. Dabei ist es sehr schwer, die Rutschfestigkeit eines Reifens zu verbessern, ohne gleichzeitig den Rollwiderstand und die Abriebbeständigkeit zu verschlechtern. Ein niedriger Rollwiderstand ist für einen niedrigen Kraftstoffverbrauch von Bedeutung, und eine hohe Abriebbeständigkeit ist der entscheidende Faktor für eine hohe Lebensdauer des Reifens.

Nassrutschfestigkeit und Rollwiderstand einer Reifenlauffläche hängen zum großen Teil von den dynamisch-mechanischen Eigenschaften der Kautschuke ab, die bei der Mischungsherstellung verwendet werden. Zur Erniedrigung des Rollwiderstands werden für die Reifenlauffläche Kautschuke mit einer hohen Rückprallelastizität bei höheren Temperaturen (60°C bis 100°C) eingesetzt. Andererseits sind zur Verbesserung der Nassrutschfestigkeit Kautschuke mit einem hohen Dämpfungsfaktor bei niedrigen Temperaturen (0 bis 23°C) bzw. niedriger Rückprallelastizität im Bereich 0°C bis 23°C von Vorteil. Um dieses komplexe Anforderungsprofil zu erfüllen, werden Mischungen aus verschiedenen Kautschuken in der Lauffläche eingesetzt. Für gewöhnlich werden Mischungen aus einem oder mehreren Kautschuken mit einer relativ hohen Glasübergangstemperatur, wie Styrol-Butadien-Kautschuk, und einem oder mehreren Kautschuken mit relativ niedriger Glasübergangstemperatur, wie Polybutadien mit einem hohen 1,4-cis-Gehalt bzw. einem Styrol-Butadien-Kautschuk mit niedrigem Styrol- und geringem Vinylgehalt oder einem in Lösung hergestellten Polybutadien mit mittlerem 1,4-cis- und niedrigem Vinylgehalt verwendet.

Doppelbindungshaltige anionisch polymerisierte Lösungskautschuke, wie Lösungs-Polybutadien und Lösungs-Styrol-Butadien-Kautschuke, besitzen gegenüber entsprechenden Emulsionskautschuken Vorteile bei der Herstellung rollwiderstandsarmer Reifenlaufflächen. Die Vorteile liegen u. a. in der Steuerbarkeit des Vinylgehalts und der damit verbundenen Glasübergangstemperatur und der Molekülverzweigung. Hieraus ergeben sich in der praktischen Anwendung besondere Vorteile in der Relation von Nassrutschfestigkeit und Rollwiderstand des Reifens. Wesentliche Beiträge zur Energiedissipation und somit zum Rollwiderstand in Reifenlaufflächen resultieren aus freien Polymerkettenenden und aus dem reversiblen Auf- und Abbau des Füllstoffnetzwerks, welches der in der Reifenlaufflächenmischung eingesetzte Füllstoff (zumeist Kieselsäure und/oder Ruß) ausbildet.

Die Einführung funktioneller Gruppen an den Polymerkettenanfängen und/oder Polymerkettenenden ermöglicht eine physikalische oder chemische Anbindung der Kettenanfänge und/oder Ketttenenden an die Füllstoffoberfläche. Dadurch wird deren Beweglichkeit eingeschränkt und somit die Energiedissipation bei dynamischer Beanspruchung der Reifenlauffläche verringert. Gleichzeitig können diese funktionellen Gruppen die Dispergierung des Füllstoffes in der Reifenlauffläche verbessern, was zu einer Schwächung des Füllstoffnetzwerkes und damit zu einer weiteren Absenkung des Rollwiderstandes führen kann.

Methoden zur Einführung von funktionellen Gruppen an den Polymerkettenanfängen mittels funktioneller anionischer Polymerisationsinitiatoren sind zum Beispiel in EP 0 513 217 B1 und EP 0 675 140 B1 (Initiatoren mit geschützter Hydroxylgruppe), US 2008/0308204 A1 (Thioether enthaltende Initiatoren) sowie in US 5,792,820 und EP 0 590 490 B1 (Alkaliamide von sekundären Aminen als Polymerisationsinitiatoren) beschrieben.

US-A-5 290 901 beschreibt die Herstellung von Polysiloxanen, die am Kettenende eine silanhaltige Carbinolgruppe aufweisen. Die Modifizierung von Dienpolymeren, die Herstellung und Verwendung von diesen Dienpolymere enthaltenden vulkanisierbaren Kautschukmischungen sind aber nicht beschrieben.

Insbesondere beschreibt die EP 0 594 107 B1 die *in situ* Verwendung von sekundären Aminen als funktionelle Polymerisationsinitiatoren, wobei die Kettenendenfunktionalisierung der Polymeren nicht beschrieben ist. In US 5,502,131, US 5,521,309 und US 5,536,801 wird die Einführung von tertiären Aminogruppen an den Polymerkettenanfängen durch anionische Polymerisationsinitiatoren aufgeführt, wobei diese Polymerisationsinitiatoren durch Umsetzung von Allyl- bzw. Xylylaminen mit alkaliorganischen Verbindungen erhalten wurden. WO 2011/079922) beschreibt die Herstellung modifizierter Dienpolymere mit tert. Aminogruppe. Oxa-2-silacycloalkane als Funktionalisierungsreagenzien für das Kettenende sind jedoch nicht beschrieben.

Weiterhin wurden zahlreiche Methoden zur Einführung von funktionellen Gruppen an den Polymerkettenenden entwickelt. Beispielsweise wird in der EP 0 180 141 A1 die Verwendung von 4,4'-Bis(dimethylamino)benzophenon oder N-Methylcaprolactam als Funktionalisierungsreagenzien beschrieben. Die Verwendung von Ethylenoxid und N-Vinylpyrrolidon ist aus EP 0 864 606 A1 bekannt. Eine Reihe weiterer möglicher Funktionalisierungsreagenzien sind in US 4,417,029 aufgeführt. WO2010/043664 beschreibt die Herstellung modifizierter Dienpolymere, die Hydroxylendgruppen enthalten. Funktionalisierte Polymere, die am Kettenende eine silanhaltige Carbinolgruppe aufweisen sind nicht beschrieben.

Insbesondere Silane mit in der Summe mindestens zwei Halogen- und/oder Alkyloxy- und/oder Aryloxysubstituenten an Silicium eignen sich gut zur Funktionalisierung an den Polymerkettenenden von Dienkautschuken, da einer der genannten Substituenten am Si-Atom leicht durch ein anionisches Dienpolymerkettenende ausgetauscht werden kann und der bzw. die weiteren der zuvor genannten Substituenten an Si als funktionelle Gruppe zur Verfügung steht, welche, gegebenenfalls nach Hydrolyse, mit dem Füllstoff der Reifenlaufflächenmischung wechselwirken kann. Beispiele für derartige Silane finden sich in US 3,244,664, US 4,185,042, EP 0 890 580 A1.

Viele der genannten Reagenzien zur Funktionalisierung an den Polymerkettenenden weisen jedoch Nachteile auf, wie z.B. schlechte Löslichkeit im Prozesslösungsmittel, hohe Toxizität oder hohe

Flüchtigkeit, was zur Kontamination des rückgeführten Lösungsmittels führen kann. Darüber hinaus können viele dieser Funktionalisierungsreagenzien mit mehr als einem anionischen Polymerkettenende reagieren, was zu oft störenden und schwer zu kontrollierenden Kopplungsreaktionen führt. Dies gilt v. a. für die genannten Silane. Diese haben außerdem den weiteren Nachteil, dass bei Reaktion dieser Silane mit dem anionischen Polymerkettenende Komponenten wie Halogenide oder Alkoxygruppen abgespalten werden, wobei letztere leicht zu Alkoholen umgesetzt werden. Halogenide begünstigen die Korrosion; Alkohole können zur Verunreinigung des Prozesslösungsmittels führen. Ein weiterer Nachteil bei der Verwendung von Silanen als Funktionalisierungsreagenzien besteht darin, dass die daraus erhaltenen Siloxan terminierten Polymere nach der Funktionalisierung über die Si-OR-Gruppen an den Polymerkettenenden (bzw. über die Si-OH-Gruppen nach Hydrolyse der Si-OR-Gruppen) unter Ausbildung von Si-O-Si-Bindungen koppeln können, was zu einem unerwünschten Viskositätsanstieg der Kautschuke während der Aufarbeitung und Lagerung führt. Es wurden viele Methoden zur Verringerung dieses Viskositätsanstiegs bei Siloxan terminierten Polymeren beschrieben, wie beispielsweise der Zusatz von stabilisierenden Reagenzien auf Basis von Säure und Säurehalogeniden (EP 0 801 078 A1), Zusatz von Siloxan (EP 1 198 506 B1), Zusatz von langkettigen Alkoholen (EP 1 237 934 B1) oder Zusatz von Reagenzien zur Kontrolle des pH-Wertes (EP 1 726 598).

EP 0 778 311 B1 beschreibt u. a. Cyclosiloxane als Funktionalisierungsreagenzien zur Einführung von Si-OH-Gruppen an den Polymerkettenenden. Diese Cyclosiloxane haben gegenüber den oben genannten Silanen den Vorteil, dass nur jeweils ein anionisches Polymerkettenende pro Cyclosiloxan-Molekül reagieren kann. Es finden also während der Funktionalisierungsreaktion keine Kopplungen durch Addition von mehr als einer Polymerkette pro Funktionalisierungsreagenz statt. Die nach Einführung des Funktionalisierungsreagenzes gebildeten Si-OH-Endgruppen können jedoch, wie oben erläutert und auch in US 4,618,650 beschrieben, unter Ausbildung von Si-O-Si-Bindungen koppeln. Auch hier besteht also das Problem des unerwünschten Viskositätsanstiegs während der Aufarbeitung und Lagerung.

Es bestand daher die Aufgabe, funktionalisierte Dienpolymere bereitzustellen, die die Nachteile des Standes der Technik nicht aufweisen und es insbesondere ermöglichen, die gute Reaktivität von Silanen mit anionischen Polymerkettenenden zu nutzen, ohne deren Nachteile, wie etwa Reaktion mehrerer anionischer Polymerkettenenden pro Silanmolekül, Abspaltung störender Komponenten und Kopplung unter Ausbildung von Si-O-Si-Bindungen bei der Aufarbeitung und Lagerung, zu haben.

Zur Lösung dieser Aufgabe werden funktionalisierte Dienpolymere vorgeschlagen, welche an den Polymerkettenanfängen tertiäre Aminogruppen der Formel (Ia), (Ib), (IIa) oder (IIb) 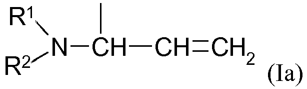 oder 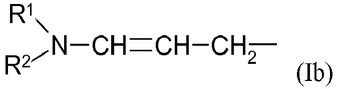 oder 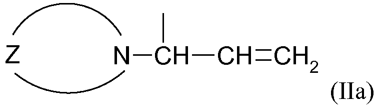 oder 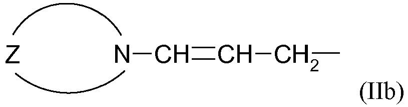 aufweisen, wobei
- R¹, R²: gleich oder verschieden sind und Alkyl-, Cycloalkyl-, Aryl-, Alkaryl- und Aralkylreste darstellen, die Heteroatome wie O, N, S und/oder Si enthalten können,
- Z: für einen divalenten organischen Rest steht, der neben C und H Heteroatome wie O, N, S und/oder Si enthalten kann
sowie an den Polymerkettenenden silanhaltige Carbinolgruppen der Formel (III) 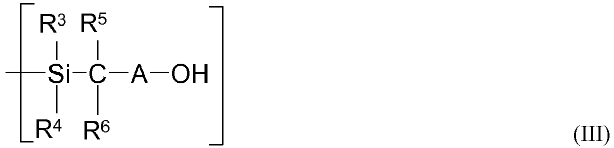 oder deren Metallsalze oder deren Halbmetallsalze aufweisen, wobei
- R³, R⁴, R⁵, R⁶: gleich oder verschieden sind und ein H, Alkyl-, Cycloalkyl-, Aryl-, Alkaryl- und Aralkylreste darstellen, die Heteroatome wie O, N, S und/oder Si enthalten können,
- A: für einen divalenten organischen Rest steht, der neben C und H Heteroatome wie O, N, S und/oder Si enthalten kann.

Bevorzugt können die silanhaltigen Carbinolgruppen der Formel (III) an den Polymerkettenenden der erfindungsgemäßen funktionalisierten Dienpolymere als Metallsalze der Formel (IV): 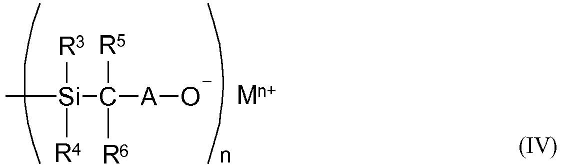 vorliegen, wobei
- R³, R⁴, R⁵, R⁶: gleich oder verschieden sind und für H, Alkyl-, Cycloalkyl-, Aryl-, Alkaryl- und Aralkylreste stehen, die Heteroatome wie O, N, S und/oder Si enthalten können,
- A: für einen divalenten organischen Rest steht, der neben C und H Heteroatome wie O, N, S und/oder Si enthalten kann,
- n: eine ganze Zahl von 1 bis 4 ist,
- M: ein Metall oder Halbmetall der Wertigkeit 1 bis 4 ist, vorzugsweise Li, Na, K, Mg, Ca, Fe, Co, Ni, Al, Nd, Ti, Si und/oder Sn.

Bevorzugte Polymere zur Herstellung der erfindungsgemäßen funktionalisierten Dienpolymere sind Dienpolymere und durch Copolymerisation von Dienen mit vinylaromatischen Monomeren erhältliche Dien-Copolymere.

Als Diene sind 1,3-Butadien, Isopren, 1,3-Pentadien, 2,3-Dimethylbutadien, 1-Phenyl-1,3-butadien und/oder 1,3-Hexadien bevorzugt. Besonders bevorzugt werden 1,3-Butadien und/oder Isopren eingesetzt.

Als vinylaromatische Comonomere können z. B. Styrol, o-, m- und/oder p-Methylstyrol, p*-tert-*Butylstyrol, α-Methylstyrol, Vinylnaphthalin, Divinylbenzol, Trivinylbenzol und/oder Divinylnaphthalin verwendet werden. Besonders bevorzugt wird Styrol eingesetzt.

Die Herstellung dieser Polymere erfolgt bevorzugt durch anionische Lösungspolymerisation.

Polymerisationsinitiatoren für die anionische Lösungspolymerisation sind tertiäre Allylamine enthaltende alkaliorganische Verbindungen, die durch Umsetzung von alkaliorganischen Verbindungen mit tertiären N-Allylaminen erhalten werden. Beispiele für tertiäre Allylamine sind N,N-Dimethylallylamin, N,N-Diethylallylamin, N,N-Diisopropylallylamin, N,N-Dihexylallylamin, N,N-Diphenylallylamin, N,N-Dibenzylallylamin, N-Allylpyrrolidin, N-Allylhexamethylenimin.

Bevorzugte alkaliorganische Verbindungen zur Umsetzung mit den tertiären Allylaminen sind n-Butyllithium und *sec*-Butyllithium. Die Umsetzung der tertiären Allylamine mit den alkaliorganischen Verbindungen zum tertiäre Amine enthaltenden Polymerisationsinitiator kann in einem separaten Präformierungsschritt erfolgen, oder die Umsetzung kann *in situ* direkt im Polymerisationsreaktor durchgeführt werden.

Zusätzlich können die bekannten Randomizer und Kontrollagenzien für die Mikrostruktur des Polymers verwendet werden, wie z.B. Diethylether, Di-n-propylether, Diisopropylether, Di-n-butylether, Ethylenglykoldimethylether, Ethylenglykoldiethylether, Ethylengykoldi-n-butylether, Ethylengykoldi-*tert*-butylether, Diethylenglykoldimethylether, Diethylenglykoldiethylether, Diethylenglykoldi-n-butylether, Diethylenglykoldi-*tert*-butylether, 2-(2-Ethoxyethoxy)-2-methyl-propan, Triethylenglykoldimethylether, Tetrahydrofuran, Ethyltetrahydrofurfurylether, Hexyltetrahydrofurfurylether, 2,2-Bis(2-tetrahydrofuryl)propan, Dioxan, Trimethylamin, Triethylamin, N,N,N',N'-Tetramethylethylendiamin, N-Methylmorpholin, N-Ethylmorpholin, 1,2-Dipiperidinoethan, 1,2-Dipyrrolidinoethan, 1,2-Dimorpholinoethan sowie Kalium- und Natriumsalze von Alkoholen, Phenolen, Carbonsäuren, Sulfonsäuren.

Derartige Lösungspolymerisationen sind bekannt und z.B. in I. Franta, Elastomers and Rubber Compounding Materials; Elsevier 1989, Seite 113 - 131, in Houben-Weyl, Methoden der Organischen Chemie, Thieme Verlag, Stuttgart, 1961, Band XIV/1 Seiten 645 bis 673 oder im Band E 20 (1987), Seiten 114 bis 134 und Seiten 134 bis 153 sowie in Comprehensive Polymer Science, Vol. 3, Part I (Pergamon Press Ltd., Oxford 1989), Seiten 365-386 beschrieben.

Die Herstellung der bevorzugten Dienpolymere findet vorzugsweise in einem Lösungsmittel statt. Als Lösungsmittel für die Polymerisation werden vorzugsweise inerte aprotische Lösungsmittel, wie z.B. paraffinische Kohlenwasserstoffe, wie isomere Butane, Pentane, Hexane, Heptane, Octane, Decane, Cyclopentan, Cyclohexan, Methylcyclohexan, Ethylcyclohexan oder 1,4-Dimethylcyclohexan oder aromatische Kohlenwasserstoffe, wie Benzol, Toluol, Ethylbenzol, Xylol, Diethylbenzol oder Propylbenzol eingesetzt. Diese Lösungsmittel können einzeln oder in Kombination verwendet werden. Bevorzugt sind Cyclohexan und n-Hexan. Ebenfalls möglich ist die Abmischung mit polaren Lösungsmitteln.

Die Menge an Lösungsmittel beträgt bei dem erfindungsgemäßen Verfahren üblicherweise 100 bis 1000 g, bevorzugt 200 bis 700 g, bezogen auf 100 g der gesamten Menge an eingesetztem Monomer. Es ist aber auch möglich, die eingesetzten Monomere in Abwesenheit von Lösungsmitteln zu polymerisieren.

Die Polymerisation kann in der Weise durchgeführt werden, dass zuerst die Monomere, gegebenenfalls Kontrollagenzien zur Einstellung der Mikrostruktur und das Lösungsmittel vorgelegt werden und dann die Polymerisation durch Zugabe des Initiators gestartet wird. Es ist auch möglich in einem Zulaufverfahren zu polymerisieren, bei dem der Polymerisationsreaktor durch Zugabe von Monomeren, gegebenenfalls Kontrollagenzien zur Einstellung der Mikrostruktur und Lösungsmittel befüllt wird, wobei der Initiator vorgelegt wird oder mit den Monomeren, gegebenenfalls Kontrollagenzien zur Einstellung der Mikrostruktur und dem Lösungsmittel zugegeben wird. Variationen, wie Vorlegen des Lösungsmittels im Reaktor, Zugabe des Initiators und dann Zugabe der Monomere sowie gegebenenfalls Kontrollagenzien zur Einstellung der Mikrostruktur sind möglich. Weiterhin kann die Polymerisation in einer kontinuierlichen Fahrweise betrieben werden. Weitere Monomer-, Kontrollagenzien- und Lösungsmittelzugabe während oder am Ende der Polymerisation ist in allen Fällen möglich.

In einer bevorzugten Ausführungsform werden die Monomere, gegebenenfalls Kontrollagenzien zur Einstellung der Mikrostruktur, das Lösungsmittel sowie ein tertiäres Allylamin vorgelegt und die Polymerisation durch Zugabe einer alkaliorganischen Verbindung, wie BuLi, gestartet, wobei sich der tertiäres Amin enthaltende Polymerisationsinitiator *in situ* durch Reaktion der alkaliorganischen Verbindung mit dem tertiären Allylamin ausbildet.

Die Polymerisationszeit kann in breiten Bereichen von einigen Minuten bis zu einigen Stunden schwanken. Üblicherweise wird die Polymerisation innerhalb einer Zeitspanne von etwa 10 Minuten bis zu 8 Stunden, bevorzugt 20 Minuten bis 4 Stunden, durchgeführt. Sie kann sowohl bei Normaldruck als auch bei erhöhtem Druck (1 bis 10 bar) durchgeführt werden.

Es wurde überraschend festgestellt, dass durch die Verwendung von tertiäres Allylamin enthaltenden Polymerisationsinitiatoren zur Einführung von tertiären Aminogruppen der Formel Ia, Ib, IIa oder IIb an den Polymerkettenanfängen in Kombination mit der Verwendung von einem oder mehreren 1-Oxa-2-silacycloalkanen als Funktionalisierungsreagenzien zur Einführung von funktionellen Gruppen an den Polymerkettenenden Dienpolymere hergestellt werden können, welche verbesserte Reifenlaufflächeneigenschaften aufweisen und die Nachteile des Standes der Technik nicht aufweisen. Beispielsweise können Kopplungen durch Mehrfachreaktionen am Funktionalisierungsreagenz, Abspaltung von störenden Komponenten sowie Kopplungen durch Ausbildung von Si-O-Si-Bindungen bei der Aufarbeitung und Lagerung der Polymere nicht stattfinden.

Bei den tertiäres Allylamin enthaltenden Polymerisationsinitiatoren handelt es sich um Verbindungen der allgemeinen Formel (Va), (Vb), (VIa) oder (VIb) 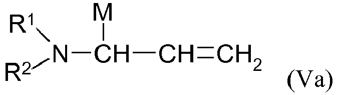 oder 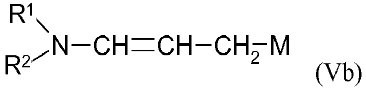 oder 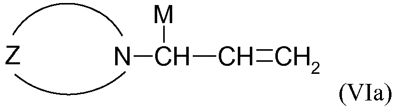 oder 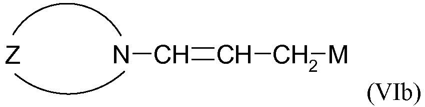 wobei
- R¹, R²: gleich oder verschieden sind und Alkyl-, Cycloalkyl-, Aryl-, Alkaryl- und Aralkylreste darstellen, die Heteroatome wie O, N, S und/oder Si enthalten können,
- Z: für einen divalenten organischen Rest steht, der neben C und H Heteroatome wie O, N, S und/oder Si enthalten kann
- M: für Li, Na oder K steht.

Bei den 1-Oxa-2-silacycloalkanen handelt es sich um Verbindungen der allgemeinen Formel (VII) 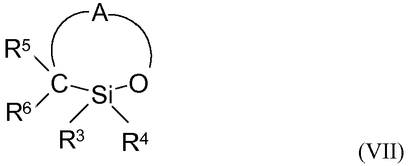 wobei
- R³, R⁴, R⁵, R⁶: gleich oder verschieden sind und für H, Alkyl-, Cycloalkyl-, Aryl-, Alkaryl- und Aralkylreste stehen, die Heteroatome wie O, N, S und/oder Si enthalten können.
- A: für einen divalenten organischen Rest steht, der neben C und H Heteroatome wie O, N, S und/oder Si enthalten kann.

Das Si-Atom der Formel (VII) ist dabei monofunktionell, wobei unter monofunktionell zu verstehen ist, dass das Si-Atom drei Si-C-Bindungen und eine Si-O-Bindung aufweist.

Beispiele für Verbindungen der Formel (VII) sind:
2,2-Dimethyl-1-oxa-2-silacyclohexan 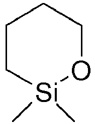
2,2-Diethyl-1-oxa-2-silacyclohexan 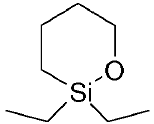
2,2-Dipropyl-1-oxa-2-silacyclohexan 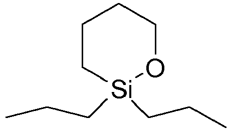
2-Methyl-2-phenyl-1 -oxa-2-silacyclohexan 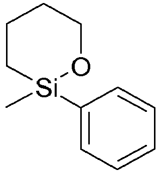
2,2-Diphenyl-1 -oxa-2-silacyclohexan 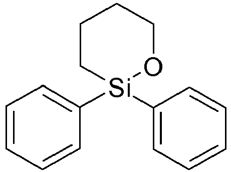
2,2,5,5-Tetramethyl-1-oxa-2-silacyclohexan 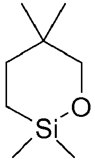
2,2,3-Trimethyl-1-oxa-2-silacyclohexan 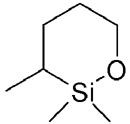
2,2-Dimethyl-1 -oxa-2-silacyclopentan 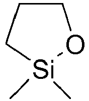
2,2,4-Trimethyl-1-oxa-2-silacyclopentan 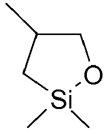
2,2-Dimethyl-1,4-dioxa-2-silacyclohexan 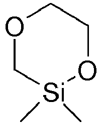
2,2,5,5-Tetramethyl-1,4-dioxa-2,5-disilacyclohexan 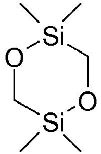
2,2,4-Trmethyl-[1,4,2]oxazasilinan 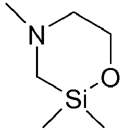
Benzo-2,2-dimethyl-1,4-dioxa-2-silacyclohexan 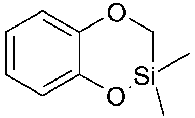
Benzo-2,2,4-trimethyl-1-oxa-4-aza-2-silacyclohexan

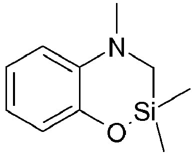

Es wurde festgestellt, dass die erfindungsgemäßen funktionalisierten Dienpolymere durch Reaktion von reaktiven Polymerkettenenden mit 1-Oxa-2-silacycloalkanen und gegebenenfalls nachfolgender Protonierung der Alkoholat-Endgruppe zum Alkohol hergestellt werden können. Somit ist auch die Verwendung von 1-Oxa-2-silacycloalkanen als Funktionalisierungsreagenzien zur Herstellung der erfindungsgemäßen funktionalisierten Dienpolymere mit Endgruppen der Formel (III) oder (IV) Gegenstand der Erfindung.

Die erfindungsgemäßen funktionalisierten Dienpolymere weisen vorzugsweise mittlere Molgewichte (Zahlenmittel) von 10000 bis 2000000 g/mol, bevorzugt 100000 bis 1000000 g/mol und Glasübergangstemperaturen von -110°C bis +20°C, bevorzugt -110°C bis 0°C, sowie Mooney-Viskositäten ML 1+4 (100°C) von 10 bis 200, vorzugsweise 30 bis 150 Mooney-Einheiten auf.

Ein weiterer Gegenstand der Erfindung ist ein Verfahren zur Herstellung der erfindungsgemäßen funktionalisierten Dienpolymere, wonach tertiäres Allylamin enthaltende Polymerisationsinitiatoren eingesetzt werden sowie eine oder mehrere Verbindungen der Formel (VII), als Reinstoff, Lösung oder Suspension, zur Reaktion mit den reaktiven Polymerkettenenden verwendet werden. Die Zugabe der Verbindungen der Formel (VII) erfolgt bevorzugt nach Abschluss der Polymerisation; sie kann aber auch vor vollständigem Monomerumsatz erfolgen. Die Reaktion von Verbindungen der Formel (VII) mit den reaktiven Polymerkettenenden erfolgt bei den üblicherweise für die Polymerisation verwendeten Temperaturen. Die Reaktionszeiten für die Umsetzung von Verbindungen nach Formel (VII) mit den reaktiven Polymerkettenenden können zwischen einigen Minuten bis mehreren Stunden liegen.

Bevorzugt wird ein Verfahren zur Herstellung der erfindungsgemäßen funktionalisierten Dienpolymere, bei dem die Polymerisationsinitiatoren durch Umsetzung von tertiären Allylaminen mit alkaliorganischen Verbindungen in einem separaten Präformierungsschritt oder *in situ* direkt im Polymerisationsreaktor erhalten werden sowie eine oder mehrere Verbindungen der Formel (VII), als Reinstoff, Lösung oder Suspension, zur Reaktion mit den reaktiven Polymerkettenenden verwendet werden. Die Zugabe der Verbindungen der Formel (VII) erfolgt bevorzugt nach Abschluss der Polymerisation; sie kann aber auch vor vollständigem Monomerumsatz erfolgen. Die Reaktion von Verbindungen der Formel (VII) mit den reaktiven Polymerkettenenden erfolgt bei den üblicherweise für die Polymerisation verwendeten Temperaturen. Die Reaktionszeiten für die Umsetzung von Verbindungen nach Formel (VII) mit den reaktiven Polymerkettenenden können zwischen einigen Minuten bis mehreren Stunden liegen.

Vorzugsweise ist die Stoffmenge an tertiären Allylaminen gleich oder kleiner als die Stoffmenge an alkaliorganischen Verbindungen, besonders bevorzugt ist ein Stoffmengenverhältnis zwischen tertiärem Allylamin und alkaliorganischer Verbindung von 0,05 - 2,00 : 0,05 - 2,00.

Es hat sich herausgestellt, dass mit diesem Stoffmengenverhältnis die Polymerkettenenden mit silanhaltigen Carbinolverbindungen funktionalisiert werden, so dass Dienpolymere mit Funktionalisierung an beiden Enden gebildet werden, die verbesserte Reifenlaufflächeneigenschaften aufweisen, wobei Kopplungen durch Mehrfachreaktionen am Funktionalisierungsreagenz, Abspaltung von störenden Komponenten sowie Kopplungen durch Ausbildung von Si-O-Si-Bindungen bei der Aufarbeitung und Lagerung der Polymere vermieden werden.

Die Menge der 1-Oxa-2-silacycloalkane kann so gewählt werden, dass alle reaktiven Polymerkettenenden mit Verbindungen der Formel (VII) reagieren, oder es kann ein Unterschuss dieser Verbindungen eingesetzt werden. Die eingesetzten Mengen der Verbindungen nach Formel (VII) können einen weiten Bereich abdecken. Die bevorzugten Mengen liegen zwischen 0,005 - 2 Gew.-%, besonders bevorzugt zwischen 0,01 - 1 Gew.-%, bezogen auf die Menge an Polymer.

Zusätzlich zu Verbindungen nach Formel (VII) können auch die für die anionische Dienpolymerisation typischen Kopplungsreagenzien zur Reaktion mit den reaktiven Polymerkettenenden eingesetzt werden. Beispiele für solche Kopplungsreagenzien sind Siliciumtetrachlorid, Methyltrichlorsilan, Dimethyldichlorsilan, Zinntetrachlorid, Dibutylzinndichlorid, Tetraalkoxysilane, Ethylenglykoldiglycidylether, 1,2,4-Tris(chlormethyl)benzol. Solche Kopplungsreagenzien können vor den Verbindungen der Formel (VII) zugesetzt werden, zusammen mit diesen oder nach diesen.

Nach erfolgter Zugabe von Verbindungen der Formel (VII) und gegebenenfalls von Kopplungsreagenzien werden vor oder während der Aufarbeitung der erfindungsgemäßen funktionalisierten Polymere bevorzugt die üblichen Alterungsschutzmittel, wie sterisch gehinderte Phenole, aromatische Amine, Phosphite, Thioether, zugesetzt. Weiterhin können die üblichen, für Dienkautschuke verwendeten Strecköle, wie DAE (Distillate Aromatic Extract), TDAE (Treated Distillate Aromatic Extract), MES (Mild Extraction Solvates), RAE (Residual Aromatic Extract), TRAE (Treated Residual Aromatic Extract), naphthenische und schwere naphthenische Öle zugegeben werden. Auch die Zugabe von Füllstoffen, wie Ruß und Kieselsäure, Kautschuken und Kautschukhilfsmitteln ist möglich.

Die Entfernung des Lösungsmittels aus dem Polymerisationsprozess kann nach den üblichen Verfahren, wie Destillation, Strippen mit Wasserdampf oder Anlegen eines Vakuums, gegebenenfalls bei höherer Temperatur, erfolgen.

Ein weiterer Erfindungsgegenstand ist die Verwendung der erfindungsgemäßen funktionalisierten Polymere zur Herstellung von vulkanisierbaren Kautschukzusammensetzungen.

Vorzugsweise weisen diese vulkanisierbaren Kautschukzusammensetzungen weitere Kautschuke, Füllstoffe, Kautschukchemikalien, Verarbeitungshilfsmittel und Strecköle auf.

Zusätzliche Kautschuke sind beispielsweise Naturkautschuk sowie Synthesekautschuke. Sofern vorhanden liegt deren Menge üblicherweise im Bereich von 0,5 bis 95, bevorzugt 10 bis 80 Gew.-%, bezogen auf die gesamte Polymermenge in der Mischung. Die Menge an zusätzlich zugegebenen Kautschuken richtet sich wieder nach dem jeweiligen Verwendungszweck der erfindungsgemäßen Mischungen.

Exemplarisch sind hier literaturbekannte Synthesekautschuke aufgeführt. Sie umfassen u. a.
- BR -: Polybutadien
- ABR -: Butadien/Acrylsäure-C₁-C₄-Alkylester-Copolymere
- IR -: Polyisopren
- E-SBR -: Styrol-Butadien-Copolymerisate mit Styrolgehalten von 1-60, vorzugsweise 20-50 Gew.-%, hergestellt durch Emulsionspolymerisation
- S-SBR -: Styrol-Butadien-Copolymerisate mit Styrolgehalten von 1-60, vorzugsweise 15-45 Gew.-%, hergestellt durch Lösungspolymerisation
- IIR -: Isobutylen-Isopren-Copolymerisate
- NBR -: Butadien-Acrylnitril-Copolymere mit Acrylnitrilgehalten von 5-60, vorzugsweise 10-40 Gew.-%
- HNBR -: teilhydrierter oder vollständig hydrierter NBR-Kautschuk
- EPDM -: Ethylen-Propylen-Dien-Terpolymerisate
sowie Mischungen dieser Kautschuke. Für die Herstellung von Kfz-Reifen sind insbesondere Naturkautschuk, E-SBR sowie S-SBR mit einer Glastemperatur oberhalb von -60°C, Polybutadienkautschuk mit hohem cis-Gehalt (> 90 %), der mit Katalysatoren auf Basis Ni, Co, Ti oder Nd hergestellt wurde, sowie Polybutadienkautschuk mit einem Vinylgehalt von bis zu 80 % sowie deren Mischungen von Interesse.

Als Füllstoffe kommen für die erfindungsgemäßen Kautschukzusammensetzungen alle bekannten in der Kautschukindustrie verwendeten Füllstoffe in Betracht. Diese umfassen sowohl aktive als auch inaktive Füllstoffe.

Zu erwähnen sind beispielhaft:
- hochdisperse Kieselsäuren, hergestellt z.B. durch Fällung von Lösungen von Silikaten oder Flammenhydrolyse von Siliciumhalogeniden mit spezifischen Oberflächen von 5-1000, vorzugsweise 20-400 m²/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-, Ti-Oxiden vorliegen;
- synthetische Silikate, wie Aluminiumsilikat, Erdalkalisilikat wie Magnesiumsilikat oder Calciumsilikat, mit BET-Oberflächen von 20-400 m²/g und Primärteilchendurchmessern von 10-400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Metallsulfate, wie Calciumsulfat, Bariumsulfat;
- Ruße: Die hierbei zu verwendenden Ruße sind nach dem Flammruß-, dem Channel-, Furnace-, Gasruß-, Thermal-, Acetylenruß- oder Lichtbogenverfahren hergestellte Ruße und besitzen BET-Oberflächen von 9 - 200 m²/g, z.B. SAF-, ISAF-LS-, ISAF-HM-, ISAF-LM-, ISAF-HS-, CF-, SCF-, HAF-LS-, HAF-, HAF-HS-, FF-HS-, SPF-, XCF-, FEF-LS-, FEF-, FEF-HS-, GPF-HS-, GPF-, APF-, SRF-LS-, SRF-LM-, SRF-HS-, SRF-HM- und MT-Ruße bzw. nach ASTMN110-,N219-, N220-, N231-, N234-, N242-, N294-, N326-, N327-, N330-, N332-, N339-, N347-, N351-, N356-, N358-, N375-, N472-, N539-, N550-, N568-, N650-, N660-, N754-, N762-, N765-, N774-, N787- und N990-Ruße.
- Kautschukgele, insbesondere solche auf Basis von BR, E-SBR und/oder Polychloropren mit Teilchengrößen von 5 bis 1000 nm.

Bevorzugt werden als Füllstoffe hochdisperse Kieselsäuren und/oder Ruße eingesetzt.

Die genannten Füllstoffe können alleine oder im Gemisch eingesetzt werden. In einer besonders bevorzugten Ausführungsform enthalten die Kautschukzusammensetzungen als Füllstoffe ein Gemisch aus hellen Füllstoffen, wie hochdispersen Kieselsäuren, und Rußen, wobei das Mischungsverhältnis von hellen Füllstoffen zu Rußen bei 0,01 :1 bis 50:1 bevorzugt 0,05:1 bis 20:1 liegt.

Die Füllstoffe werden hierbei in Mengen im Bereich von 10 bis 500 Gew.-Teile bezogen auf 100 Gew.-Teile Kautschuk eingesetzt. Bevorzugt werden 20 bis 200 Gew.-Teile eingesetzt.

In einer weiteren Ausführungsform der Erfindung enthalten die Kautschukzusammensetzungen noch Kautschukhilfsmittel, die beispielsweise die Verarbeitungseigenschaften der Kautschukzusammensetzungen verbessern, der Vernetzung der Kautschukzusammensetzungen dienen, die physikalischen Eigenschaften der aus den erfindungsgemäßen Kautschukzusammensetzungen hergestellten Vulkanisate für deren speziellen Einsatzzweck verbessern, die Wechselwirkung zwischen Kautschuk und Füllstoff verbessern oder zur Anbindung des Kautschuks an den Füllstoff dienen.

Kautschukhilfsmittel sind z.B. Vernetzeragentien, wie z.B. Schwefel oder Schwefel liefernde Verbindungen, sowie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Silane, Verzögerer, Metalloxide, Strecköle, wie z.B. DAE (Distillate Aromatic Extract), TDAE (Treated Distillate Aromatic Extract), MES (Mild Extraction Solvates), RAE (Residual Aromatic Extract), TRAE (Treated Residual Aromatic Extract), naphthenische und schwere naphthenische Öle sowie Aktivatoren.

Die gesamte Menge an Kautschukhilfsmitteln liegt im Bereich von 1 bis 300 Gewichtsteilen, bezogen auf 100 Gewichtsteile an Gesamtkautschuk. Bevorzugt werden 5 bis 150 Gewichtsteile an Kautschukhilfsmitteln eingesetzt.

Die Herstellung der vulkanisierbaren Kautschukzusammensetzungen kann in einem einstufigen oder in einem mehrstufigen Verfahren erfolgen, wobei 2 bis 3 Mischstufen bevorzugt sind. So kann z.B. die Zugabe von Schwefel und Beschleuniger in einer separaten Mischstufe z.B. auf einer Walze erfolgen, wobei Temperaturen im Bereich 30°C bis 90°C bevorzugt sind. Bevorzugt erfolgt die Zugabe von Schwefel und Beschleuniger in der letzen Mischstufe.

Für die Herstellung der vulkanisierbaren Kautschukzusammensetzungen geeignete Aggregate sind beispielsweise Walzen, Kneter, Innenmischer oder Mischextruder.

Somit sind vulkanisierbare Kautschukzusammensetzungen enthaltend funktionalisierte Polymere mit tertiären Aminogruppen der Formel (Ia), (Ib), (IIa) oder (IIb) an den Polymerkettenanfängen und funktionellen Gruppen der Formel (III) oder (IV) an den Polymerkettenenden ein weiterer Gegenstand der Erfindung.

Die Kautschukzusammensetzungen können auch funktionalisierte Dienpolymere mit tertiären Aminogruppen der Formel (Ia), (Ib), (IIa) oder (IIb) an den Polymerkettenanfängen und funktionellen Gruppen der Formel (III) und (IV) an den Polymerkettenenden enthalten.

Ein weiterer Gegenstand der Erfindung ist die Verwendung der erfindungsgemäßen vulkanisierbaren Kautschukzusammensetzungen zur Herstellung von Kautschukvulkanisaten, insbesondere für die Herstellung von Reifen, insbesondere Reifenlaufflächen, die einen besonders geringen Rollwiderstand bei hoher Nassrutschfestigkeit und Abriebbeständigkeit aufweisen.

Die erfindungsgemäßen vulkanisierbaren Kautschukzusammensetzungen eignen sich auch zur Herstellung von Formkörpern, z.B. für die Herstellung von Kabelmänteln, Schläuchen, Treibriemen, Förderbändern, Walzenbelägen, Schuhsohlen, Dichtungsringen und Dämpfungselementen.

Die nachfolgenden Beispiele dienen der Erläuterung der Erfindung, ohne dabei limitierend zu wirken.

### Beispiele

### Beispiel la: Synthese von Styrol-Butadien-Copolymer. nicht funktionalisiert (Vergleichsbeispiel)

Ein inertisierter 20L-Reaktor wurde mit 8,5 kg Hexan, 1185 g 1,3 -Butadien, 315 g Styrol, 8 mmol 2,2-Bis(2-tetrahydrofuryl)propan sowie 10,3 mmol n-Butyllithium befüllt und der Inhalt auf 65°C erwärmt. Es wurde unter Rühren 25 min bei 65°C polymerisiert. Anschließend wurden 10,3 mmol Cetylalkohol zugesetzt, die Kautschuklösung abgelassen, durch Zugabe von 3 g Irganox® 1520 (2,4-Bis(octylthiomethyl)-6-methylphenol) stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 50,2 Gew.-%; Styrol-Gehalt (IR-spektroskopisch): 20,9 Gew.-%, Glasübergangstemperatur (DSC): -25,6°C; zahlenmittleres Molekulargewicht Mₙ (GPC, PS-Standard): 258 kg/mol; M_{w}/Mₙ: 1,15; Mooney-Viskosität (ML1+4 bei 100°C): 52 ME

### Beispiel 1b: Synthese von Styrol-Butadien-Copolymer mit tertiärer Aminogruppe am Kettenanfang (Vergleichsbeispiel)

Ein inertisierter 20L-Reaktor wurde mit 8,5 kg Hexan, 1185 g 1,3-Butadien, 315 g Styrol, 9,9 mmol 2,2-Bis(2-tetrahydrofuryl)propan, 14,6 mmol N,N-Dimethylallylamin sowie 14,6 mmol n-Butyllithium befüllt und der Inhalt auf 65°C erwärmt. Es wurde unter Rühren 25 min bei 65°C polymerisiert. Anschließend wurden 14,6 mmol Cetylalkohol zugesetzt, die Kautschuklösung abgelassen, durch Zugabe von 3 g Irganox® 1520 stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 51,7 Gew.-%; Styrol-Gehalt (IR-spektroskopisch): 20,9 Gew.-%, Glasübergangstemperatur (DSC): -23,5°C; zahlenmittleres Molekulargewicht Mₙ (GPC, PS-Standard): 268 kg/mol; M_{w}/Mₙ: 1,15; Mooney-Viskosität (ML1+4 bei 100°C): 59 ME

### Beispiel 1c: Synthese von Styrol-Butadien-Copolymer mit Funktionalisierung am Kettenende durch Umsetzung mit Funktionalisierungsreagenz der Formel (VII) (Vergleichsbeispiel)

Ein inertisierter 20L-Reaktor wurde mit 8,5 kg Hexan, 1185 g 1,3-Butadien, 315 g Styrol, 8,2 mmol 2,2-Bis(2-tetrahydrofuryl)propan sowie 10,55 mmol n-Butyllithium befüllt und der Inhalt auf 65°C erwärmt. Es wurde unter Rühren 25 min bei 65°C polymerisiert. Danach wurden 10,55 mmol (1,69 mL) 2,2,4-Trimethyl-[1,4,2]oxazasilinan zugegeben und der Reaktorinhalt weitere 20 min auf 65°C erwärmt. Anschließend wurde die Kautschuklösung abgelassen, durch Zugabe von 3 g Irganox® 1520 stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 50,3 Gew.-%; Styrol-Gehalt (IR-spektroskopisch): 20,9 Gew.-%, Glasübergangstemperatur (DSC): -25,7°C; zahlenmittleres Molekulargewicht Mₙ (GPC, PS-Standard): 216 kg/mol; M_{w}/Mₙ: 1,18; Mooney-Viskosität (ML1+4 bei 100°C): 44 ME

### Beispiel 1d: Synthese von Styrol-Butadien-Copolymer mit tertiärer Aminogruppe am Kettenanfang und Funktionalisierung am Kettenende durch Umsetzung mit Funktionalisierungsreagenz der Formel (VII) (erfindungsgemäß)

Ein inertisierter 20L-Reaktor wurde mit 8,5 kg Hexan, 1185 g 1,3-Butadien, 315 g Styrol, 8,6 mmol 2,2-Bis(2-tetrahydrofuryl)propan, 11,6 mmol N,N-Dimethylallylamin sowie 11,6 mmol Butyllithium befüllt und der Inhalt auf 65°C erwärmt. Es wurde unter Rühren 25 min bei 65°C polymerisiert. Danach wurden 11,6 mmol (1,85 mL) 2,2,4-Trimethyl-[1,4,2]oxazasilinan zugegeben und der Reaktorinhalt weitere 20 min auf 65°C erwärmt. Anschließend wurde die Kautschuklösung abgelassen, durch Zugabe von 3 g Irganox® 1520 stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 49,8 Gew.-%; Styrol-Gehalt (IR-spektroskopisch): 21,0 Gew.-%, Glasübergangstemperatur (DSC): -25,6°C; zahlenmittleres Molekulargewicht Mₙ (GPC, PS-Standard): 222 kg/mol; M_{w}/Mₙ: 1,11; Mooney-Viskosität (ML1+4 bei 100°C): 42 ME

### Beispiele 2 a-d: Kautschukzusammensetzungen

Es wurden Kautschukzusammensetzungen für Reifenlaufflächen hergestellt, wobei die Styrol-Butadien-Copolymeren der Beispiele 1a - 1d verwendet werden.

Die Bestandteile sind in Tabelle 1 aufgelistet. Die Kautschukzusammensetzungen (ohne Schwefel und Beschleuniger) wurden in einem 1,5-L Kneter hergestellt. Schwefel und Beschleuniger wurden anschließend auf einer Walze bei 40°C zugemischt.

### Beispiele 3 a-d: Vulkanisateigenschaften

Zur Bestimmung der Vulkanisateigenschaften wurden die Kautschukzusammensetzungen der Beispiele 2a-d für 20 Minuten bei 160°C vulkanisiert. Die Eigenschaften der entsprechenden Vulkanisate sind in Tabelle 2 als Beispiele 3a-d aufgeführt.

An den Vulkanisaten wurden folgende Eigenschaften nach den genannten Normen bestimmt:
- Rückprallelastizität bei 60°C (gemäß DIN 53512)
- Abrieb (gemäß DIN 53516)
- ΔG*: Differenz aus den frequenzabhängigen viskoelastischen Moduli G* bei 0,5% Dehnung und 15% Dehnung bei 60°C/1Hz (MTS-Amplitudensweep)
- tanδ-Maximum: Maximum der dynamischen Dämpfung bei der Messung des frequenzabhängigen viskoelastischen Moduls bei 60°C/1Hz mit tanδ = G"/G' (MTS-Amplitudensweep)
- tanδ bei 0°C, 60°C: aus der Messung der temperaturabhängigen dynamischen Dämpfung nach DIN 53513 (10 Hz, Heizrate 1K·min⁻¹) mit tanδ = E"/E'.
- Reißdehnung, Reißspannung (gemäß DIN 53504)

Die Rückprallelastizität bei 60°C, ΔG*, tanδ-Maximum (MTS) und tanδ bei 60°C sind Indikatoren für den Hystereseverlust beim Rollen des Reifens (Rollwiderstand). Je höher die Rückprallelastizität bei 60°C und je niedriger ΔG*, tanδ-Maximum (MTS) und tanδ bei 60°C umso geringer ist der Rollwiderstand des Reifens. Tanδ bei 0°C ist ein Maß für die Nassrutschfestigkeit des Reifens. Je höher tanδ bei 0°C umso höher ist die zu erwartende Nassrutschfestigkeit des Reifens.

**Tabelle 1: Bestandteile der Reifenlaufflächenkautschukzusammensetzungen (Angaben in phr: Gewichtsteile pro 100 Gewichtsteile Kautschuk)**

| | **Vergleichsbeispiel 2a** | **Vergleichsbeispiel 2b** | **Vergleichsbeispiel 2c** | **Erfindungsgemäßes Beispiel 2d** |
|---|---|---|---|---|
| Styrol-Butadien-Copolymer gemäß Beispiel 1a | 70 | 0 | 0 | 0 |
| Styrol-Butadien-Copolymer gemäß Beispiel 1b | 0 | 70 | 0 | 0 |
| Styrol-Butadien-Copolymer gemäß Beispiel 1c | 0 | 0 | 70 | 0 |
| Styrol-Butadien-Copolymer, gemäß Beispiel 1d | 0 | 0 | 0 | 70 |
| hoch-cis-haltiges Polybutadien (BUNA™ CB 24 der Lanxess Deutschland GmbH) | 30 | 30 | 30 | 30 |
| Kieselsäure (Ultrasil® 7000) | 90 | 90 | 90 | 90 |
| Ruß (Vulcan® J/N 375) | 7 | 7 | 7 | 7 |
| TDAE-Öl (Vivatec 500) | 36,3 | 36,3 | 36,3 | 36,3 |
| Verarbeitungshilfsmittel (Aflux 37 der Rheinchemie Rheinau GmbH) | 3 | 3 | 3 | 3 |
| Stearinsäure (Edenor C 18 98-100) | 1 | 1 | 1 | 1 |
| Alterungsschutzmittel (Vulkanox® 4020/LG der Lanxess Deutschland GmbH) | 2 | 2 | 2 | 2 |
| Alterungsschutzmittel (Vulkanox® HS/LG der Lanxess Deutschland GmbH) | 2 | 2 | 2 | 2 |
| Zinkoxid (Zinkweiß Rotsiegel) | 3 | 3 | 3 | 3 |
| Wachs (Antilux 654) | 2 | 2 | 2 | 2 |
| Silan (Si 69® von Evonik) | 7,2 | 7,2 | 7,2 | 7,2 |
| Diphenylguanidin (Rhenogran DPG 80) | 2,75 | 2,75 | 2,75 | 2,75 |
| Sulfenamid (Vulkacit® NZ/EGC der Lanxess | 1,6 | 1,6 | 1,6 | 1,6 |
| Schwefel (Mahlschwefel 90/95 Chancel) | 1,6 | 1,6 | 1,6 | 1,6 |
| Sulfonamid (Vulkalent® E/C) | 0,2 | 0,2 | 0,2 | 0,2 |

**Tabelle 2: Vulkanisateigenschaften**

| | **Vergleichsbeispiel 3a** | **Vergleichsbeispiel 3b** | **Vergleichsbeispiel 3c** | **Erfindungsgemäßes Beispiel 3d** |
|---|---|---|---|---|
| Kautschukzusammensetzung gem. Vergleichsbeispiel 2a | X | | | |
| Kautschukzusammensetzung gem. Vergleichsbeispiel 2b | | X | | |
| Kautschukzusammensetzung gem. Vergleichsbeispiel 2c | | | X | |
| Kautschukzusammensetzung gem. Vergleichsbeispiel 2d | | | | X |

| **Vulkanisateigenschaften:** | | | | |
|---|---|---|---|---|
| Rückprallelastizität bei 60°C [%] | 56,2 | 56,1 | 58,7 | 59,7 |
| ΔG* (G*@0.5% - G*@15%) [MPa] | 1,37 | 1,08 | 1,08 | 0,81 |
| tan δ-Maximum (MTS-Amplitudensweep bei 1 Hz, 60°C) | 0,173 | 0,162 | 0.156 | 0,149 |
| tan δ bei 0°C (dynamische Dämpfung bei 10Hz) | 0,269 | 0,268 | 0,279 | 0,301 |
| tan δ bei 60°C (dynamische Dämpfung bei 10 Hz) | 0,103 | 0,097 | 0,085 | 0,085 |
| Reißdehnung (S2-Probekörper) [%] | 457 | 429 | 449 | 436 |
| Reißspannung (S2-Probekörper) [MPa] | 19,4 | 18,5 | 20,8 | 19,8 |
| Abrieb (DIN 53516) [mm³] | 69 | 73 | 74 | 70 |

Für Reifenanwendungen wird ein niedriger Rollwiderstand benötigt, der dann gegeben ist, wenn im Vulkanisat ein hoher Wert für die Rückprallelastizität bei 60°C sowie ein niedriger tanδ-Wert in der dynamischen Dämpfung bei hoher Temperatur (60°C) und ein niedriges tan δ-Maximum im MTS-Amplitudensweep gemessen werden. Wie aus Tabelle 2 ersichtlich, zeichnet sich das Vulkanisat des erfindungsgemäßen Beispiels 3d durch eine hohe Rückprallelastizität bei 60°C, einen niedrigen tanδ-Wert in der dynamischen Dämpfung bei 60°C sowie ein niedriges tan δ-Maximum im MTS-Amplitudensweep aus.

Für Reifenanwendungen wird zudem eine hohe Nassrutschfestigkeit benötigt, die dann gegeben ist, wenn das Vulkanisat einen hohen tanδ-Wert in der dynamischen Dämpfung bei tiefer Temperatur (0°C) aufweist. Wie aus Tabelle 2 ersichtlich, zeichnet sich das Vulkanisat des erfindungsgemäßen Beispiels 3d durch einen hohen tanδ-Wert in der dynamischen Dämpfung bei 0°C aus.

## Patentansprüche

1. Dienpolymere, **dadurch gekennzeichnet, dass** die Dienpolymere an den Polymerkettenanfängen tertiäre Aminogruppen der Formel (Ia), (Ib), (IIa) oder (IIb) 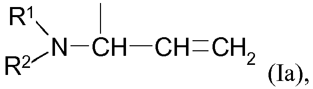 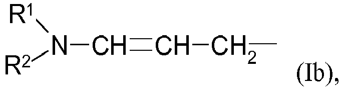 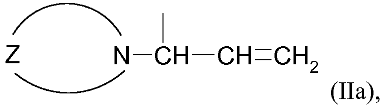 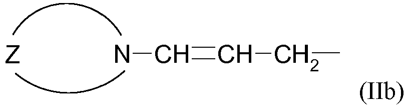 aufweisen, wobei
R¹, R² gleich oder verschieden sind und Alkyl-, Cycloalkyl-, Aryl-, Alkaryl- und Aralkylreste darstellen, die Heteroatome wie O, N, S und/oder Si enthalten können,
Z für einen divalenten organischen Rest steht, der neben C und H Heteroatome wie O, N, S und/oder Si enthalten kann,
sowie an den Polymerkettenenden silanhaltige Carbinolgruppen der Formel (III) 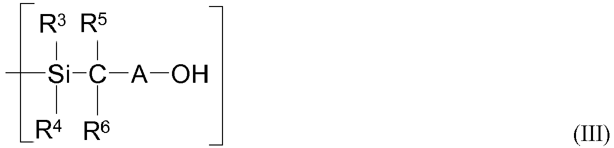 oder deren Metallsalze oder deren Halbmetallsalze aufweisen, wobei
R³, R⁴, R⁵, R⁶ gleich oder verschieden sind und ein H, Alkyl-, Cycloalkyl-, Aryl-, Alkaryl- und Aralkylreste darstellen, die Heteroatome wie O, N, S und/oder Si enthalten können,
A für einen divalenten organischen Rest steht, der neben C und H Heteroatome wie O, N, S und/oder Si enthalten kann.

2. Dienpolymere nach Anspruch 1, **dadurch gekennzeichnet, dass** die silanhaltigen Carbinolgruppen der Formel (III) an den Polymerkettenenden der Dienpolymere als Metallsalze der Formel (IV) 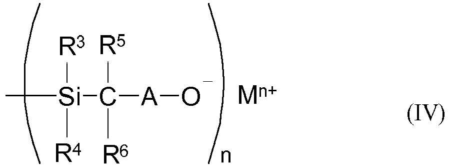 vorliegen, wobei
R³, R⁴, R⁵, R⁶ gleich oder verschieden sind und ein H, Alkyl-, Cycloalkyl-, Aryl-, Alkaryl- und Aralkylreste darstellen, die Heteroatome wie O, N, S und/oder Si enthalten können,
A für einen divalenten organischen Rest steht, der neben C und H Heteroatome wie O, N, S und/oder Si enthalten kann,
n eine ganze Zahl von 1 bis 4 ist,
M ein Metall oder Halbmetall der Wertigkeit 1 bis 4 ist, vorzugsweise Li, Na, K, Mg, Ca, Fe, Co, Ni, Al, Nd, Ti, Si und/oder Sn.

3. Dienpolymere nach Anspruch 1 oder 2, **dadurch gekennzeichnet, dass** das Dienpolymer ein Polybutadien, ein Polyisopren, ein Butadien-Isopren-Copolymer, ein Butadien-Styrol-Copolymer, ein Isopren-Styrol-Copolymer oder ein Butadien-Isopren-Styrol-Terpolymer ist.

4. Dienpolymere nach Anspruch 1, **dadurch gekennzeichnet, dass** die Dienpolymere mittlere Molgewichte (Zahlenmittel) von 10000 bis 2000000 g/mol, bevorzugt 100000 bis 1000000 g/mol aufweisen, wobei das Molgewicht bestimmt wird mittels GPC gegen PS-Standard.

5. Dienpolymere nach Anspruch 1, **dadurch gekennzeichnet, dass** die Dienpolymere Glasübergangstemperaturen von -110°C bis +20°C, bevorzugt -110°C bis 0°C aufweisen, wobei die Glasübergangstemperatur ermittelbar ist mittels DSC.

6. Dienpolymere oder Dien-Copolymere nach Anspruch 1, **dadurch gekennzeichnet, dass** die Dienpolymere Mooney-Viskositäten [ML 1+4 (100°C)] von 10 bis 200, vorzugsweise 30 bis 150 Mooney-Einheiten aufweisen.

7. Verfahren zur Herstellung von Dienpolymeren nach Anspruch 1, **dadurch gekennzeichnet, dass** als Funktionalisierungsreagenz zur Einführung von funktionellen Gruppen an den Polymerkettenenden ein oder mehrere 1-Oxa-2-silacycloalkane und zur Einführung von tertiären Aminogruppen an den Polymerkettenanfängen tertiäre Allylamin enthaltende Polymerisationsinitiatoren der allgemeinen Formel (Va), (Vb), (VIa) oder (VIb) eingesetzt werden, 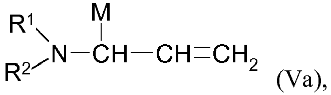 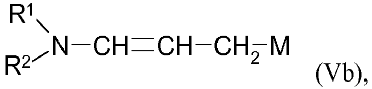 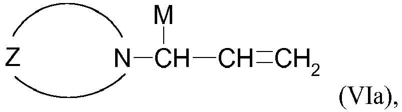 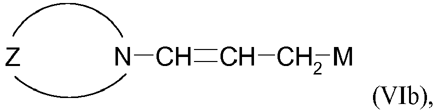 wobei
R¹, R² gleich oder verschieden sind und Alkyl-, Cycloalkyl-, Aryl-, Alkaryl- und Aralkylreste darstellen, die Heteroatome wie O, N, S und/oder Si enthalten können,
Z für einen divalenten organischen Rest steht, der neben C und H Heteroatome wie O, N, S und/oder Si enthalten können,
M für Li, Na, K steht.

8. Verfahren nach Anspruch 7, **dadurch gekennzeichnet, dass** es sich bei den 1-Oxa-2-silacycloalkanen um Verbindungen der allgemeinen Formel (VII) 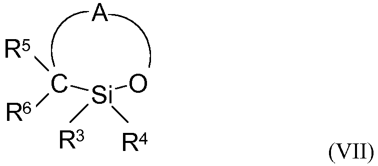 handelt, wobei
R³, R⁴,R⁵, R⁶ gleich oder verschieden sind und für H, Alkyl-, Cycloalkyl-, Aryl-, Alkaryl- und Aralkylreste stehen, die Heteroatome wie O, N, S und/oder Si enthalten können.
A für einen divalenten organischen Rest steht, der neben C und H Heteroatome wie O, N, S und/oder Si enthalten kann.

9. Verfahren zur Herstellung von Dienpolymeren nach Anspruch 7, **dadurch gekennzeichnet, dass** Polymerisationsinitiatoren durch Umsetzung von tertiären Allylaminen mit alkaliorganischen Verbindungen in situ oder in einem separaten Präformierungsschritt erhalten werden sowie ein oder mehrere 1-Oxa-2-silacycloalkane zur Reaktion mit den reaktiven Polymerkettenenden eingesetzt werden.

10. Verfahren nach Anspruch 7, **dadurch gekennzeichnet, dass** die Zugabe der 1-Oxa-2-silacycloalkane nach Abschluss der Polymerisation erfolgt.

11. Verfahren nach Anspruch 7, **dadurch gekennzeichnet dass** die anionischen Polymerisationsinitiatoren durch Umsetzung von tertiären Allylaminen mit alkaliorganischen Verbindungen erhalten werden.

12. Verfahren nach Anspruch 9, **dadurch gekennzeichnet, dass** als tertiäres Allylamin N,N-Dimethylallylamin und als alkaliorganische Verbindung Butyllithium eingesetzt werden.

13. Verfahren nach Anspruch 9, **dadurch gekennzeichnet, dass** die Stoffmenge an tertiären Allylaminen gleich oder kleiner ist als die Stoffmenge an alkaliorganischen Verbindungen, besonders bevorzugt beträgt das Stoffmengenverhältnis 0,05 - 2,00 : 0,05 - 2,00.

14. Verfahren nach Anspruch 7, **dadurch gekennzeichnet, dass** die Menge an 1-Oxa-2-silacycloalkanen zwischen 0,005 - 2 Gew.-%, bevorzugt zwischen 0,01 - 1 Gew.-%, bezogen auf die Menge an Polymer mit reaktiven Polymerkettenenden, liegt.

15. Verfahren nach Anspruch 7, **dadurch gekennzeichnet, dass** Kopplungsreagenzien zur Umsetzung eingesetzt werden.

16. Verwendung von Dienpolymeren nach einem der Ansprüche 1 - 6 zur Herstellung von vulkanisierbaren Kautschukzusammensetzungen.

17. Vulkanisierbare Kautschukzusammensetzungen enthaltend Dienpolymeren nach Anspruch 1 oder 2.

18. Vulkanisierbare Kautschukzusammensetzungen enthaltend funktionalisierte Dienpolymeren mit tertiären Aminogruppen der Formel (Ia), (Ib), (IIa) oder (IIb) an den Polymerkettenanfängen und funktionellen Gruppen der Formel (III) an den Polymerkettenenden nach Anspruch 1.

19. Vulkanisierbare Kautschukzusammensetzungen enthaltend funktionalisierte Dienpolymeren mit tertiären Aminogruppen der Formel (Ia), (Ib), (IIa) oder (IIb) an den Polymerkettenanfängen und funktionellen Gruppen der Formel (IV) an den Polymerkettenenden nach Anspruch 2.

20. Vulkanisierbare Kautschukzusammensetzungen enthaltend funktionalisierte Dienpolymeren mit tertiären Aminogruppen der Formel (Ia), (Ib), (IIa) oder (IIb) an den Polymerkettenanfängen und funktionellen Gruppen der Formel (III) und (IV) an den Polymerkettenenden nach Ansprüchen 1 und 2.

21. Verwendung der vulkanisierbaren Kautschukzusammensetzungen nach einem der Ansprüche 18-20 zur Herstellung von Reifen, insbesondere Reifenlaufflächen.

22. Verwendung der vulkanisierbaren Kautschukzusammensetzungen nach einem der Ansprüche 18-20 zur Herstellung von Formkörpern, insbesondere Kabelmänteln, Schläuchen, Treibriemen, Förderbändern, Walzenbelägen, Schuhsohlen, Dichtungsringen und Dämpfungselementen.

23. Reifen erhältlich durch Vulkanisation von Kautschukmischungen gemäß einem der Ansprüche 18 bis 20.

24. Formkörper erhältlich durch Vulkanisation von Kautschukmischungen gemäß einem der Ansprüche 18 bis 20.

## Claims

1. Diene polymers, **characterized in that** the diene polymers have, at the start of the polymer chains, tertiary amino groups of the formula (Ia), (Ib), (IIa) or (IIb) 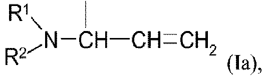 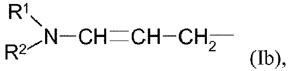 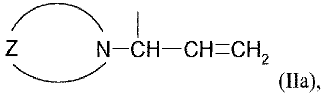 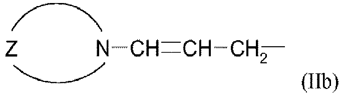 where
R¹, R² are the same or different and are each alkyl, cycloalkyl, aryl, alkaryl and aralkyl radicals which may contain heteroatoms such as 0, N, S and/or Si,
Z is a divalent organic radical which, as well as C and H, may contain heteroatoms such as 0, N, S and/or Si,
and, at the end of the polymer chains, silane-containing carbinol groups of the formula (III) 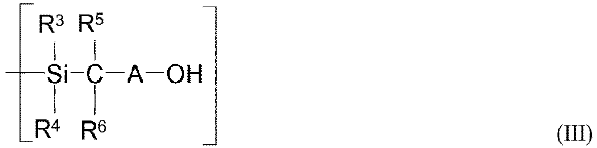 or metal salts thereof or semimetal salts thereof, where
R³, R⁴, R⁵, R⁶ are the same or different and are each an H or alkyl, cycloalkyl, aryl, alkaryl and aralkyl radicals which may contain heteroatoms such as 0, N, S and/or Si,
A is a divalent organic radical which, as well as C and H, may contain heteroatoms such as 0, N, S and/or Si.

2. Diene polymers according to Claim 1, **characterized in that** the silane-containing carbinol groups of the formula (III) at the end of the polymer chains of the diene polymers are in the form of metal salts of the formula (IV) 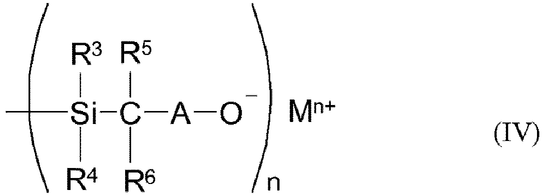 where
R³, R⁴, R⁵, R⁶ are the same or different and are each an H or alkyl, cycloalkyl, aryl, alkaryl and aralkyl radicals which may contain heteroatoms such as 0, N, S and/or Si,
A is a divalent organic radical which, as well as C and H, may contain heteroatoms such as 0, N, S and/or Si,
n is an integer from 1 to 4,
M is a metal or semimetal of valency 1 to 4, preferably Li, Na, K, Mg, Ca, Fe, Co, Ni, Al, Nd, Ti, Si and/or Sn.

3. Diene polymers according to Claim 1 or 2, **characterized in that** the diene polymer is a polybutadiene, a polyisoprene, a butadiene-isoprene copolymer, a butadiene-styrene copolymer, an isoprene-styrene copolymer or a butadiene-isoprene-styrene terpolymer.

4. Diene polymers according to Claim 1, **characterized in that** the diene polymers have mean molar masses (number-average) of 10 000 to 2 000 000 g/mol, preferably 100 000 to 1 000 000 g/mol, the molar mass being determined by means of GPC against PS standard.

5. Diene polymers according to Claim 1, **characterized in that** the diene polymers have glass transition temperatures of -110°C to +20°C, preferably -110°C to 0°C, the glass transition temperature being determinable by means of DSC.

6. Diene polymers or diene copolymers according to Claim 1, **characterized in that** the diene polymers have Mooney viscosities [ML 1+4 (100°C)] of 10 to 200, preferably 30 to 150, Mooney units.

7. Process for preparing diene polymers according to Claim 1, **characterized in that** the functionalization reagents used for introduction of functional groups at the end of the polymer chains are one or more 1-oxa-2-silacycloalkanes, and the tertiary amino groups at the start of the polymer chains are introduced using tertiary allylamine-containing polymerization initiators of the general formula (Va), (Vb), (VIa) or (VIb) 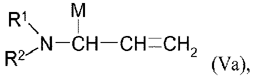 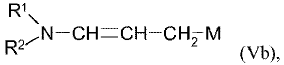 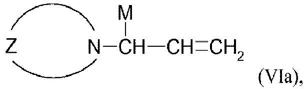 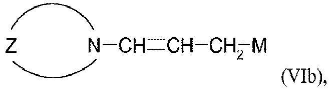 where
R¹, R² are the same or different and are each alkyl, cycloalkyl, aryl, alkaryl and aralkyl radicals which may contain heteroatoms such as 0, N, S and/or Si,
Z is a divalent organic radical which, as well as C and H, may contain heteroatoms such as 0, N, S and/or Si,
M is Li, Na, K.

8. Process according to Claim 7, **characterized in that** the 1-oxa-2-silacycloalkanes are compounds of the general formula (VII) 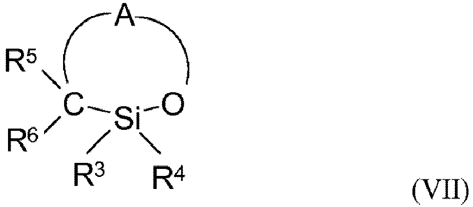 where
R³, R⁴, R⁵, R⁶ are the same or different and are each H, alkyl, cycloalkyl, aryl, alkaryl and aralkyl radicals which may contain heteroatoms such as 0, N, S and/or Si,
A is a divalent organic radical which, as well as C and H, may contain heteroatoms such as O, N, S and/or Si.

9. Process for preparing diene polymers according to Claim 7, **characterized in that** polymerization initiators are obtained by reaction of tertiary allylamines with organo-alkali metal compounds in situ or in a separate preforming step and one or more 1-oxa-2-silacycloalkanes are used for reaction with the reactive ends of the polymer chains.

10. Process according to Claim 7, **characterized in that** the 1-oxa-2-silacycloalkanes are added after completion of the polymerization.

11. Process according to Claim 7, **characterized in that** the anionic polymerization initiators are obtained by reaction of tertiary allylamines with organo-alkali metal compounds.

12. Process according to Claim 9, **characterized in that** the tertiary allylamine used is N,N-dimethyl-allylamine, and the organo-alkali metal compound butyllithium.

13. Process according to Claim 9, **characterized in that** the molar amount of tertiary allylamines is less than or equal to the molar amount of organo-alkali metal compounds, the molar ratio more preferably being 0.05 - 2.00:0.05 - 2.00.

14. Process according to Claim 7, **characterized in that** the amount of 1-oxa-2-silacycloalkanes is between 0.005 - 2% by weight, preferably between 0.01 - 1% by weight, based on the amount of polymer having reactive ends of the polymer chains.

15. Process according to Claim 7, **characterized in that** coupling reagents are used for the reaction.

16. Use of diene polymers according to any of Claims 1 - 6 for production of vulcanizable rubber compositions.

17. Vulcanizable rubber compositions comprising diene polymers according to Claim 1 or 2.

18. Vulcanizable rubber compositions comprising functionalized diene polymers having tertiary amino groups of the formula (Ia), (Ib), (IIa) or (IIb) at the start of the polymer chains and functional groups of the formula (III) at the end of the polymer chains according to Claim 1.

19. Vulcanizable rubber compositions comprising functionalized diene polymers having tertiary amino groups of the formula (Ia), (Ib), (IIa) or (IIb) at the start of the polymer chains and functional groups of the formula (IV) at the end of the polymer chains according to Claim 2.

20. Vulcanizable rubber compositions comprising functionalized diene polymers having tertiary amino groups of the formula (Ia), (Ib), (IIa) or (IIb) at the start of the polymer chains and functional groups of the formula (III) and (IV) at the end of the polymer chains according to Claims 1 and 2.

21. Use of the vulcanizable rubber compositions according to any of Claims 18 - 20 for production of tyres, especially tyre treads.

22. Use of the vulcanizable rubber compositions according to any of Claims 18 - 20 for production of mouldings, especially cable sheaths, hoses, drive belts, conveyor belts, roll covers, shoe soles, sealing rings and damping elements.

23. Tyres obtainable by vulcanization of rubber mixtures according to any of Claims 18 to 20.

24. Mouldings obtainable by vulcanization of rubber mixtures according to any of Claims 18 to 20.

## Revendications

1. Polymères diéniques, **caractérisés en ce que** les polymères diéniques comprennent aux débuts des chaînes polymères des groupes amino tertiaires de formule (Ia), (Ib), (IIa) ou (IIb) 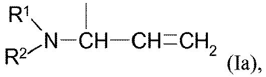 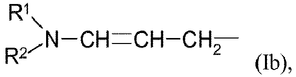 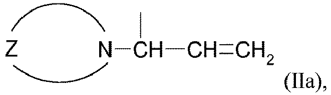 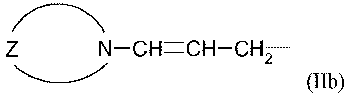 dans lesquelles
R¹, R² sont identiques ou différents, et représentent des radicaux alkyle, cycloalkyle, aryle, alkaryle et aralkyle, qui peuvent contenir des hétéroatomes tels qu'O, N, S et/ou Si,
Z représente un radical organique bivalent qui peut contenir en plus de C et H des hétéroatomes tels qu'O, N, S et/ou Si,
ainsi que des groupes carbinol contenant du silane de formule (III) aux extrémités des chaînes polymères 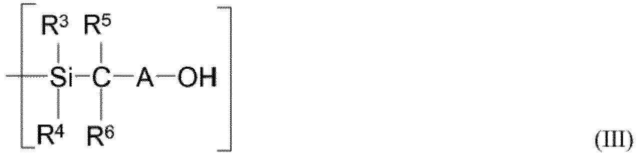 ou leurs sels de métaux ou leurs sels de semi-métaux, dans laquelle
R³, R⁴, R⁵, R⁶ sont identiques ou différents, et représentent H, des radicaux alkyle, cycloalkyle, aryle, alkaryle et aralkyle, qui peuvent contenir des hétéroatomes tels qu'O, N, S et/ou Si,
A représente un radical organique bivalent, qui peut contenir en plus de C et H des hétéroatomes tels qu'O, N, S et/ou Si.

2. Polymères diéniques selon la revendication 1, **caractérisés en ce que** les groupes carbinol contenant du silane de formule (III) aux extrémités des chaînes polymères des polymères diéniques se présentent sous la forme de sels de métaux de formule (IV) 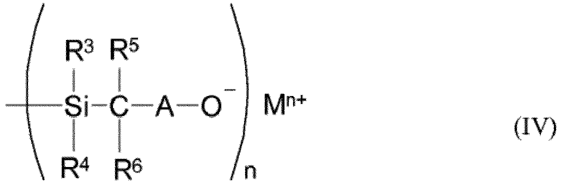 dans laquelle
R³, R⁴, R⁵, R⁶ sont identiques ou différents, et représente H, des radicaux alkyle, cycloalkyle, aryle, alkaryle et aralkyle, qui peuvent contenir des hétéroatomes tels qu'O, N, S et/ou Si,
A représente un radical organique bivalent, qui peut contenir en plus de C et H des hétéroatomes tels qu'O, N, S et/ou Si,
n est un nombre entier de 1 à 4,
M est un métal ou semi-métal d'une valence de 1 à 4, de préférence Li, Na, K, Mg, Ca, Fe, Co, Ni, Al, Nd, Ti, Si et/ou Sn.

3. Polymères diéniques selon la revendication 1 ou 2, **caractérisés en ce que** le polymère diénique est un polybutadiène, un polyisoprène, un copolymère de butadiène-isoprène, un copolymère de butadiène-styrène, un copolymère d'isoprène-styrène ou un terpolymère de butadiène-isoprène-styrène.

4. Polymères diéniques selon la revendication 1, **caractérisés en ce que** les polymères diéniques présentent des poids moléculaires moyens (moyenne en nombre) de 10 000 à 2 000 000 g/mol, de préférence de 100 000 à 1 000 000 g/mol, le poids moléculaire étant déterminé par CPG par rapport à l'étalon PS.

5. Polymères diéniques selon la revendication 1, **caractérisés en ce que** les polymères diéniques présentent des températures de transition vitreuse de -110 °C à +20 °C, de préférence de -110 °C à 0 °C, la température de transition vitreuse pouvant être déterminée par DSC.

6. Polymères diéniques ou copolymères diéniques selon la revendication 1, **caractérisés en ce que** les polymères diéniques présentent une viscosité de Mooney [ML 1+4 (100 °C)] de 10 à 200, de préférence de 30 à 150 unités Mooney.

7. Procédé de fabrication de polymères diéniques selon la revendication 1, **caractérisé en ce qu'**un ou plusieurs 1-oxa-2-silacycloalcanes sont utilisés en tant que réactif de fonctionnalisation pour l'introduction de groupes fonctionnels aux extrémités des chaînes polymères et des initiateurs de polymérisation contenant d'allylamine tertiaire de formule générale (Va), (Vb), (VIa) ou (VIb) pour l'introduction de groupes amino tertiaires aux débuts des chaînes polymères 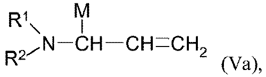 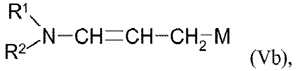 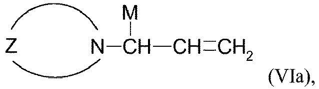 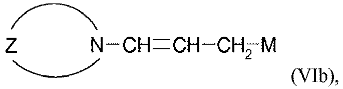 dans lesquelles
R¹, R² sont identiques ou différents, et représentent des radicaux alkyle, cycloalkyle, aryle, alkaryle et aralkyle, qui peuvent contenir des hétéroatomes tels qu'O, N, S et/ou Si,
Z représente un radical organique bivalent qui peut contenir en plus de C et H des hétéroatomes tels qu'O, N, S et/ou Si,
M représente Li, Na, K.

8. Procédé selon la revendication 7, **caractérisé en ce que** les 1-oxa-2-silacycloalcanes sont des composés de formule générale (VII) 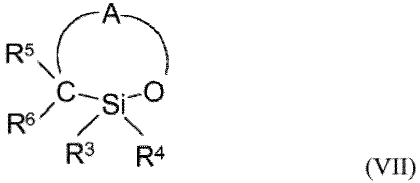 dans laquelle
R³, R⁴, R⁵, R⁶ sont identiques ou différents, et représentent H, des radicaux alkyle, cycloalkyle, aryle, alkaryle et aralkyle, qui peuvent contenir des hétéroatomes tels qu'O, N, S et/ou Si,
A représente un radical organique bivalent, qui peut contenir en plus de C et H des hétéroatomes tels qu'O, N, S et/ou Si.

9. Procédé de fabrication de polymères diéniques selon la revendication 7, **caractérisé en ce que** les initiateurs de polymérisation sont obtenus par mise en réaction d'allylamines tertiaires avec des composés organiques alcalins in situ ou lors d'une étape de préformation séparée, et un ou plusieurs 1-oxa-2-silacycloalcanes sont utilisés pour la réaction avec les extrémités de chaînes polymères réactives.

10. Procédé selon la revendication 7, **caractérisé en ce que** l'ajout des 1-oxa-2-silacycloalcanes a lieu après la fin de la polymérisation.

11. Procédé selon la revendication 7, **caractérisé en ce que** les initiateurs de polymérisation anioniques sont obtenus par mise en réaction d'allylamines tertiaires avec des composés organiques alcalins.

12. Procédé selon la revendication 9, **caractérisé en ce que** la N,N-diméthyl-allylamine est utilisée en tant qu'allylamine tertiaire et le butyllithium en tant que composé organique alcalin.

13. Procédé selon la revendication 9, **caractérisé en ce que** la quantité de matière d'allylamines tertiaires est inférieure ou égale à la quantité de matière de composés organiques alcalins, le rapport entre les quantités de matière étant de manière particulièrement préférée de 0,05 à 2,00:0,05 à 2,00.

14. Procédé selon la revendication 7, **caractérisé en ce que** la quantité de 1-oxa-2-silacycloalcanes est comprise entre 0,005 et 2 % en poids, de préférence entre 0,01 et 1 % en poids, par rapport à la quantité de polymère ayant des extrémités de chaînes polymères réactives.

15. Procédé selon la revendication 7, **caractérisé en ce que** des réactifs de couplage sont utilisés pour la réaction.

16. Utilisation de polymères diéniques selon l'une quelconque des revendications 1 à 6 pour la fabrication de compositions de caoutchouc vulcanisables.

17. Compositions de caoutchouc vulcanisables contenant des polymères diéniques selon la revendication 1 ou 2.

18. Compositions de caoutchouc vulcanisables contenant des polymères diéniques fonctionnalisés avec des groupes amino tertiaires de formule (Ia), (Ib), (IIa) ou (IIb) aux débuts des chaînes polymères et des groupes fonctionnels de formule (III) aux extrémités des chaînes polymères selon la revendication 1.

19. Compositions de caoutchouc vulcanisables contenant des polymères diéniques fonctionnalisés avec des groupes amino tertiaires de formule (Ia), (Ib), (IIa) ou (IIb) aux débuts des chaînes polymères et des groupes fonctionnels de formule (IV) aux extrémités des chaînes polymères selon la revendication 2.

20. Compositions de caoutchouc vulcanisables contenant des polymères diéniques fonctionnalisés avec des groupes amino tertiaires de formule (Ia), (Ib), (IIa) ou (IIb) aux débuts des chaînes polymères et des groupes fonctionnels de formule (III) et (IV) aux extrémités des chaînes polymères selon les revendications 1 et 2.

21. Utilisation des compositions de caoutchouc vulcanisables selon l'une quelconque des revendications 18 - 20 pour la fabrication de pneus, notamment de surfaces de roulement de pneus.

22. Utilisation des compositions de caoutchouc vulcanisables selon l'une quelconque des revendications 18 - 20 pour la fabrication de corps moulés, notamment de gaines de câbles, de tuyaux, de courroies d'entraînement, de bandes de transport, de revêtements de cylindres, de semelles de chaussures, de bagues d'étanchéité et d'éléments d'amortissement.

23. Pneus, pouvant être obtenus par vulcanisation de mélanges de caoutchouc selon l'une quelconque des revendications 18 à 20.

24. Corps moulés, pouvant être obtenus par vulcanisation de mélanges de caoutchouc selon l'une quelconque des revendications 18 à 20.
